# EUROPEAN PATENT SPECIFICATION

(11) **EP 2 584 883 B1**
(45) Date of publication and mention of the grant of the patent: **14.01.2015**
(21) Application number: 11738150.9
(22) Date of filing: 24.06.2011
(51) Int. Cl.: A01F 25/18

(54) **AN AGRICULTURAL DEVICE AND METHOD**
LANDWIRTSCHAFTLICHE VORRICHTUNG UND VERFAHREN
DISPOSITIF AGRICOLE ET PROCÉDÉ

(30) Priority: 24.06.2010 DK 201000553
(43) Date of publication of application: 01.05.2013
(73) Proprietor: Kjær, Erling, 7480 Vildbjerg (DK)
(72) Inventor: Kjær, Erling, 7480 Vildbjerg (DK)
(74) Representative: Kristensen, Martin Hjelm
(86) International application number: PCT/DK2011/000068
(87) International publication number: WO 2011/160631

(56) References cited:
- DE-A1- 10 228 018
- DE-A1-102004 024 168
- DE-A1-102006 009 573
- DE-U1-202011 001 871

## Description

The present invention relates to an agricultural device and a method for laying out and compressing harvested crop material.

For the purpose of feeding livestock on farms it is normal procedure to harvest crop such as grass and ferment it into silage. Normally the harvested crop is placed in layers in a silo and compressed by a tractor, a loader or other tool.

Compression of the layered crop material plays an important role in the stability of silage. If, during ensilage, the newly cut crop material is not compressed permanently and thoroughly, residual oxygen becomes enclosed in the individual layers of crop material, which can ultimately result in the growth of undesired organisms such as yeast and fungi, and to improper fermentation, which, in turn, can result in a considerable reduction in the nutritional content of the silage.

German patent application DE 10 2006 009573 address this problem and suggest and apparatus with rotating shovels to process and facilitating the compression of the harvested crop. However the apparatus is rather complicated and it has only limited capacity for level out the layers of crop material as it only processes the surface of the crop material. Moreover, the apparatus is not capable of transporting the crop to the location where it should be laid out and compressed, e.g. in a silo.

Document DE 102 28018 A1 discloses an agricultural device for laying out and compressing harvested crop material according to the preamble of claim 1.

The object of the present invention is to provide an agricultural device and method for laying out and compressing harvested crop for silage, which device and method is simple and at the same time highly efficient.

The present invention also provides an agricultural device that can transport the harvested crop the place where it is laid out and compressed. Moreover the agricultural device is also capable of proportion the crop into even and thin layers and allowing these layers to be compressed to an optimal compactness.

Consequently, the present invention provides an efficient, simple and surprising efficient solution for laying out, processing and compressing harvested crop for silage.

In a first aspect the present invention provides an agricultural device for laying out and compressing harvested crop material wherein the agricultural device is adapted for connection with a vehicle and comprises a first tool for transporting and laying out the harvested crops and a second tool for processing the laid out harvested crop where the first and the second tool are coupled and adapted to be operated by the connection with the vehicle, and said second tool is a rotary harrow.

The agricultural device comprises a first tool which is adapted to transport and lay out harvested crop to the location where it is stored and fermented to produce silage for feeding livestock. The first tool can be a relatively uncomplicated construction e.g. comprising a number of steel bars adapted to carry and transport crop material. The steel bars may be mounted in parallel with a mutual of about 5 to 25 cm. The first tool may have a substantially L-shape that will make it easier to transport crop material. Preferably the first tool comprises a tilting mechanism that allows the first tool to tilt. The tilting is advantageously when the first tool has to load and unload harvested crop. Moreover, the tilting mechanism can be utilized to adjust the first tool to a position where it may serve to even out and compress the laid out crop material. The tilting mechanism can be operated by a hydraulic device such as a hydraulic cylinder. In the simplest configuration the first tool may be considered as a large hydraulic driven fork.

The second tool is adapted to process the laid out crop to facilitate the compressing and compacting of the crop to achieve the optimum conditions for fermentation. The second tool may comprise a number of substantially horizontal discs, where each disc are adapted to rotate and each disc comprises one or more downwards facing spikes or teeth. The second tool may be operated by a hydraulic device.

The first and the second tool are coupled and adapted to be operated by the connection with the vehicle. This connection may be a connection that comprises hydraulic means.

In a preferred embodiment of the agricultural device according to the invention the first tool and/or the second tool comprises at least one fitting for coupling of the first tool and the second tool. The one or more fitting may allow for detachable coupling between the first and the second tool. In this way the first and the second tool may used separately or in combination according to the invention. The one or more fittings may be attached to the first and/or the second tool by means of e.g. screws, nuts and bolts or welding.

In a preferred embodiment the first tool is a forager which is sometimes used with or as a forage wagon.

A forager is highly suitable for transporting and laying out harvested crop, e.g. in a silo. The forager normally comprises a frame with parallel steel bars that can carry a relative high load of crop. Moreover, a forager also comprises a tilting mechanism that allows the forager to unload and proportion the crop as a thin layer in a silo. The forager (Danish : silosvans) used in this context can be seen as a transport device with loading and unloading facilities and corresponds to a large fork, e.g. having dimensions in the ranges: width 2,0 - 3,5 m and length 2,0 -3,5 m. The forager or fork used according to the invention is highly suitable for transporting harvested crop into a silo.

Moreover, it has unexpected been realised that a harrow and in particular a rotary harrow is highly efficient to process the laid out crop in e.g. a silo and facilitate the compression of the harvested crop. A rotary harrow comprises a number of downward facing rotating teeth that can process the layers of crop and facilitate the compression of the crop. The rotary harrow can be operated by the connection with the vehicle in such a way that the depth of which the teeth are lowered into the layered crop can be adjusted. In this way it is possible to achieve an optimum processing of the crop before fermentation.

According to the invention the forager and the rotary harrow are equipped with fittings that allows easy coupling of the forager and the rotary harrow. Preferably the forager and the rotary harrow are detachable connected so they can be used separately for other purposes.

Preferably the vehicle to which the agricultural tool is adapted to be connected with is a tractor or a loader. A tractor or a loader are both agricultural machines that have a height weight and are suitable for compressing crop in a silo.

In a preferred embodiment the agricultural device is adapted for connection with the three-point hitch on a tractor. Most tractors for agricultural use are equipped with a three-point hitch as standard equipment. This hydraulic operated standard equipment is also suitable for connection with and for operation of the agricultural device according to the invention.

The present invention also encompasses a method for laying out and compressing harvested crop material to produce silage comprising the steps of:
- mounting on a vehicle a rotary harrow coupled with a forager to form an agricultural device;
- laying out harvested crop material by use of the forager;
- processing the lay out crop material with the rotary harrow; and
compressing the laid out crop material with the vehicle and/or the forager.

The method provides an agricultural device that is capable of transporting and laying out layers of harvested crop material to be fermented into silage. The method provides a very simple way of laying out, processing and compressing the crop as the method make use of a coupling between two well known agricultural tools. Namely, by using a coupling and a combination of rotary harrow and a forager whereby a surprising efficient method for preparing silage is achieved. Preferably the crop material is laid out and compressed in a silo, which is constructed and adapted for storage and fermentation of harvested crop into silage. The compression is mainly performed by the wheels of the vehicle, and the processing and the compression of the harvested crop can be seen as a co-operation between the agricultural device and the vehicle.

According to the method it is preferred that the agricultural device is mounted on and connected with a vehicle, which vehicle comprises a three-point hitch that can operate the coupled rotary harrow and forager. The three-point hitch is preferably hydraulic and can operate a tilting mechanism on the forager that allows the agricultural device to load and unload the crop in such a way that when the crop is unloaded it forms thin layers or crop that can be processed by the rotary harrow before it is compacted and compressed.

Moreover, the three-point hitch may lower the teeth of the rotary harrow into the laid out crop material into a desired depth to obtain an optimum processing of the crop.

Preferably the coupling between the rotary harrow and the forager allows the forager to switch between a position for loading and a position for unloading. The positions of the forager can be controlled by e.g. one or more hydraulic cylinders which are operated from the vehicle. The coupling between the rotary harrow and the forager may by established by suitable fittings and preferably the coupling is detachable. Preferably the fittings allow for independently operation of the rotary harrow and the forager, i.e. the forager may be tilted independent of the rotary harrow. The vehicle is preferably a tractor or a loader having a weight that provides for a good compression and compacting of the harvested crop.

The invention will now be described in further details with reference to drawings where
Fig. 1 depicts schematically an embodiment of agricultural device according to the invention;
Fig. 2 is a photo of the agricultural device with the forager in loading position;
Fig. 3 is a photo of the agricultural device with the forager in a position for unloading; and
Fig. 4 is photo showing a position where the teeth of the rotary harrow are lowered into the laid out crop.

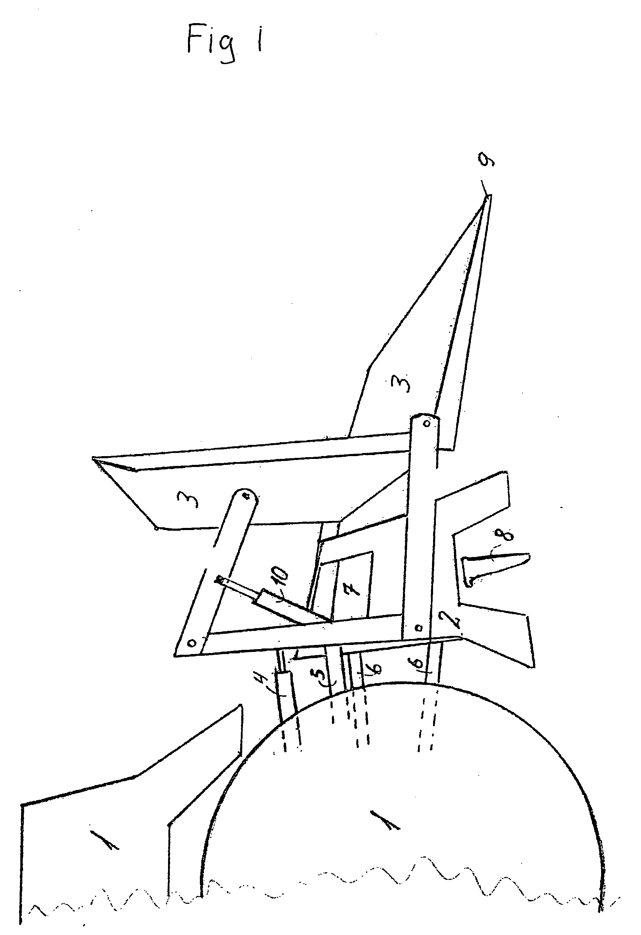

Figure 1 shows a tractor 1 which is attached to a rotary harrow 2 and a forager 3. The rotary harrow 2 coupled with the forager 3 are attached with the tractor 1 via the tractors three-point hitch comprising the top link 4 and the two lifting arms 6. The three-point hitch is operated by the tractor's 1 hydraulic system.

The rotation of the teeth 8 of the rotary harrow 2 are powered by the rotating arm 5 and the gearbox 7 of the rotary harrow 2.

The forager 3 is able to tilt by the action of the cylinder 10. The forager can tilt between a loading position and an unloading position. In the loading position the loading bars 9 of the forager are about 10 cm below the lowest point of the teeth 8 of the rotary harrow 2, thereby avoiding that the teeth 8 are damaged by concrete or the like during loading.

The top link 4 can adjust the tilting of the forager 3 and the angle of the loading bars 9, which may facilitate the loading of the forager 3.

By lowering the rotary harrow 2 it is possible to adjust how deep the teeth 8 should sink into the layers of the crop and thereby the depth of the processing of the layers of crop.

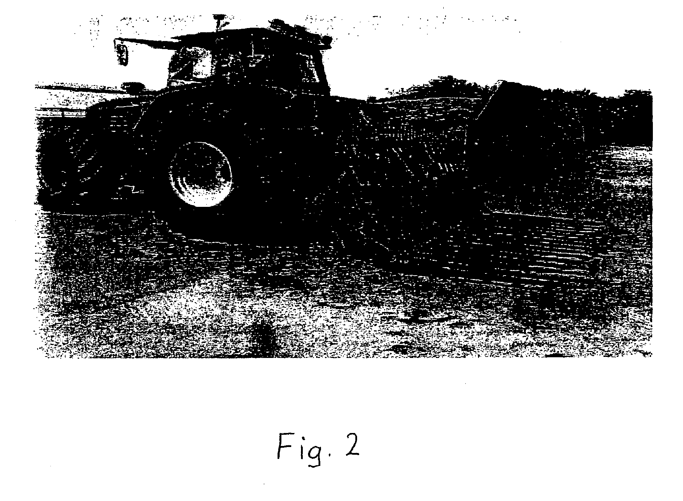

Figure 2 is a photo showing the agricultural device according to the invention mounted to a tractor and with the forager in position for loading.

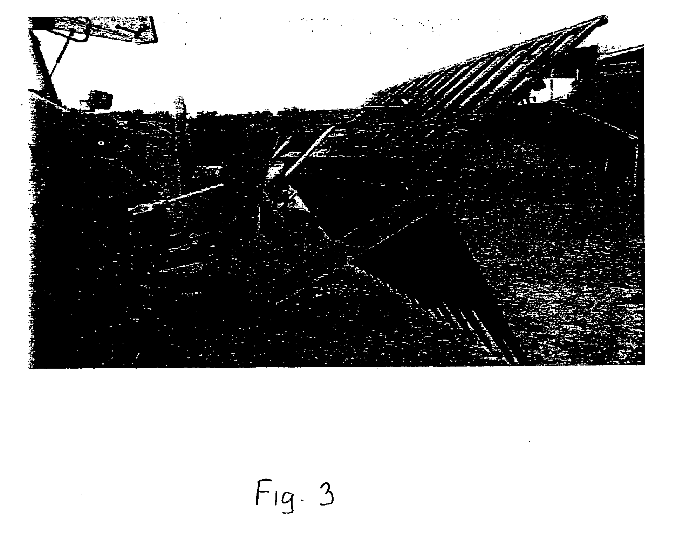

Figure 3 is a photo showing the agricultural device with the forager in a position for unloading.

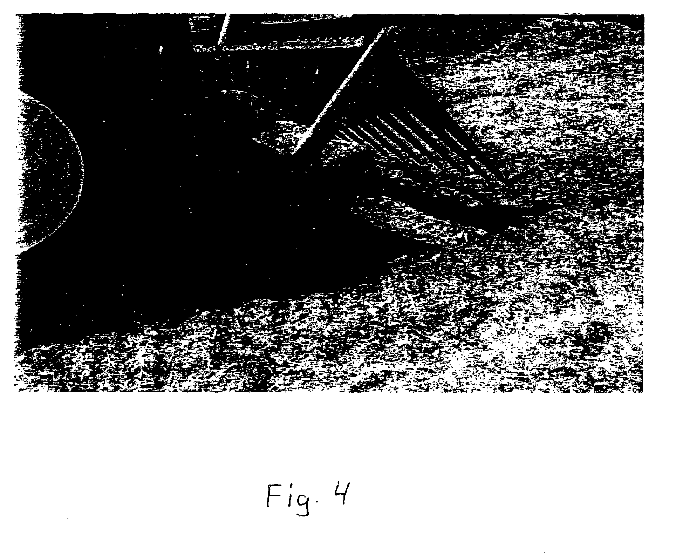

Figure 4 is a photo showing the situation where the teeth of the rotary harrow are lowered into the layer of harvested crop.

According to the invention the agricultural device is attached to a vehicle and preferably the agricultural device is attached to the three-point hitch on a tractor.

Firstly the forager is kept in a loading position and loaded with harvested crop at the location for loading. The harvested crop loaded on the forager is then transported into a silo. In the silo the crop is unloaded by tilting the forager from the loading position to the unloading position.

During the unloading the tractor is backed while the rotary harrow and the forager are lifted by the three-point hitch. In this way it is possible to lay out the crop in a layer, e.g. on the top of previously laid out layers of crop. By adjusting the tilting of the forager it is possible to determine the thickness of the layer of crop that is laid out.

When the forager is unloaded the rotary harrow is lowered into the layer of crop and when driving over the layer the crop is processed by the teeth or the harrow while the wheels of the tractor compress the crop. In this process the rotary harrow may be lowered or raised by the three-point hitch to obtain a desired depth for treatment of the layered crop.

The rotary harrow has appeared to be extremely efficient for distributing the layers of crop in the silo in such a way that voids along the walls of the silo is substantially avoided.

Sometimes it may be desirable to use one more additional vehicle to compress the harvested crop in the silo.

Although the present invention has been described with reference to only a few embodiments, it will easily be envisaged by a skilled person that several other embodiments and variations are possible within the scope of the claims. Moreover, the agricultural device may be attached to other vehicles than a tractor.

## Claims

1. An agricultural device for laying out and compressing harvested crop material wherein the agricultural device is adapted for connection with a vehicle (1) and comprises:
a first tool (3) for transporting and laying out the harvested crops and;
a second tool (2) for processing the laid out harvested crop;
wherein the first tool (3) and the second tool (2) are coupled;
**characterised in that** the first (3) and the second tool (2) are adapted to be operated by the connection with the vehicle (1), and that said second tool (2) is a rotary harrow (2).

2. An agricultural device according to claim 1, wherein the first tool (3) and/or the second tool (2) comprises at least one fitting (6) for coupling of the first tool (3) and the second tool (2).

3. An agricultural device according to claim 1 or 2, wherein the first tool (3) is a forager (3).

4. An agricultural device according to any of the preceding claims, wherein the vehicle (1) is a tractor (1) or a loader.

5. An agricultural device according to any of the preceding claims, wherein the agricultural device is adapted for connection with the three-point hitch on a tractor (1).

6. A method for laying out and compressing harvested crop material to produce silage comprising the steps of:
- mounting on a vehicle (1) a rotary harrow (2) coupled with a forager (3) to form an agricultural device;
- laying out harvested crop material by use of the forager (3);
- processing the lay out crop material with the rotary harrow (2); and compressing the laid out crop material with the vehicle (1) and/or the forager (3).

7. A method according to claim 6, wherein the vehicle (1) comprises a three-point hitch operating the coupled rotary harrow (2) and forager (3).

8. A method according to claim 6 or 7, wherein the three-point hitch lowers the teeth (8) of the rotary harrow (2) into the laid out crop material.

9. A method according to any of the preceding claims 6 to 8, wherein the coupling between the rotary harrow (2) and the forager (3) allows the forager (3) to switch between a position for loading and a position for unloading.

10. A method according to any of the preceding claims 6 to 9, wherein the crop material is laid out and compressed in a silo.

## Patentansprüche

1. Landwirtschaftliches Gerät zum Auslegen und Verdichten von geerntetem Erntegut, wobei die landwirtschaftliche Vorrichtung zur Verbindung mit einem Fahrzeug (1) ausgelegt ist und umfasst:
ein erstes Werkzeug (3) zum Transportieren und Auslegen des geernteten Ernteguts und;
ein zweites Werkzeug (2) zum Verarbeiten des ausgelegten geernteten Ernteguts;
wobei das erste Werkzeug (3) und das zweite Werkzeug (2) gekoppelt sind;
**dadurch gekennzeichnet, dass** das erste (3) und das zweite Werkzeug (2) ausgelegt sind, um durch die Verbindung mit dem Fahrzeug (1) betrieben zu werden, und dass das zweite Werkzeug (2) eine Kreiselegge (2) ist.

2. Landwirtschaftliches Gerät nach Anspruch 1, wobei das erste Werkzeug (3) und/oder das zweite Werkzeug (2) wenigstens einen Ausbau (6) zum Kuppeln des ersten Werkzeugs (3) und des zweiten Werkzeugs (2) umfasst.

3. Landwirtschaftliches Gerät nach Anspruch 1 oder 2, wobei das erste Werkzeug (3) ein Futterhäcksler (3) ist.

4. Landwirtschaftliches Gerät nach einem beliebigen der vorangehenden Ansprüche, wobei das Fahrzeug (1) ein Traktor (1) oder ein Lader ist.

5. Landwirtschaftliches Gerät nach einem beliebigen der vorangehenden Ansprüche, wobei das landwirtschaftliche Gerät zur Verbindung mit der Dreipunktankupplung auf einem Traktor (1) ausgelegt ist.

6. Verfahren zum Auslegen und Verdichten von geerntetem Erntegut, um Silage zu erzeugen, umfassend die Schritte:
- Anbringen der Kreiselegge (2), welche mit einem Futterhäcksler (3) gekoppelt ist, an einem Fahrzeug (1), um ein landwirtschaftliches Gerät zu bilden;
- Auslegen von geerntetem Erntegut unter Einsatz des Futterhäckslers (3);
- Verarbeiten des ausgelegten Ernteguts mit der Kreiselegge (2); und Verdichten des ausgelegten Ernteguts mit dem Fahrzeug (1) und/oder dem Futterhäcksler (3).

7. Verfahren nach Anspruch 6, wobei das Fahrzeug (1) eine Dreipunktankupplung umfasst, welche die gekuppelten Geräte Kreiselegge (2) und Futterhäcksler (3) betreibt.

8. Verfahren nach Anspruch 6 oder 7, wobei die Dreipunktankupplung die Zähne (8) der Kreiselegge (2) in das ausgelegte Erntegut absenkt.

9. Verfahren nach einem beliebigen der vorangehenden Ansprüche 6 bis 8, wobei die Kupplung zwischen der Kreiselegge (2) und dem Futterhäcksler (3) dem Futterhäcksler (3) erlaubt, zwischen einer Position zum Laden und einer Position zum Entladen umzuschalten.

10. Verfahren nach einem beliebigen der vorangehenden Ansprüche 6 bis 9, wobei das Erntegut in einem Silo ausgelegt und verdichtet wird.

## Revendications

1. Dispositif agricole pour étaler et compresser une matière de culture récoltée, dans lequel le dispositif agricole est adapté pour le raccordement avec un véhicule (1) et comprend :
un premier outil (3) pour transporter et étaler les cultures récoltées ; et
un second outil (2) pour traiter la culture récoltée étendue ;
dans lequel le premier outil (3) et le second outil (2) sont accouplés ;
**caractérisé en ce que** les premier (3) et second (2) outils sont adaptés pour être actionnés par le raccordement avec le véhicule (1), et que ledit second outil (2) est une herse roulante (2).

2. Dispositif agricole selon la revendication 1, dans lequel le premier outil (3) et/ou le second outil (2) comprennent au moins une fixation (6) pour l'accouplement du premier outil (3) et du second outil (2).

3. Dispositif agricole selon la revendication 1 ou 2, dans lequel le premier outil (3) est un organe fourrager (3).

4. Dispositif agricole selon une quelconque des revendications précédentes, dans lequel le véhicule (1) est un tracteur (1) ou un chargeur.

5. Dispositif agricole selon une quelconque des revendications précédentes, dans lequel le dispositif agricole est adapté pour le raccordement avec l'attelage en trois points sur un tracteur (1).

6. Procédé pour étaler et compresser une matière de culture récoltée pour produire un ensilage comprenant les étapes de :
- le montage sur un véhicule (1) d'une herse roulante (2) accouplée avec un organe fourrager (3) pour former un dispositif agricole ;
- l'étalement de matière de culture récoltée en utilisant l'organe fourrager (3) ;
- le traitement de la matière de culture étalée avec la herse roulante (2) ; et la compression de la matière de culture étalée avec le véhicule (1) et/ou l'organe fourrager (3).

7. Procédé selon la revendication 6, dans lequel le véhicule (1) comprend un attelage en trois points actionnant la herse roulante (2) et l'organe fourrager (3) accouplés.

8. Procédé selon la revendication 6 ou 7, dans lequel l'attelage en trois points abaisse les dents (8) de la herse roulante (2) dans la matière de culture étalée.

9. Procédé selon une quelconque des revendications précédentes 6 à 8, dans lequel l'accouplement entre la herse roulante (2) et l'organe fourrager (3) permet à l'organe fourrager (3) de permuter entre une position pour charger et une position pour décharger.

10. Procédé selon une quelconque des revendications précédentes 6 à 9, dans lequel la matière de culture est étendue et compressée dans un silo.
